(19) Europäisches Patentamt
European Patent Office
Office européen des brevets

(11) Veröffentlichungsnummer : **0 118 395**
**B1**

(12) # EUROPÄISCHE PATENTSCHRIFT

(45) Veröffentlichungstag der Patentschrift : **27.07.88**

(51) Int. Cl.⁴ : **C 23 F 11/16**, C 23 F 11/08, C 02 F 5/14

(21) Anmeldenummer : **84810095.4**

(22) Anmeldetag : **27.02.84**

(54) **Verfahren zur Inhibierung der Korrosion von Metalloberflächen und/oder der Kesselsteinablagerung darauf.**

(30) Priorität : **03.03.83 GB 8305933**
**20.06.83 GB 8316711**

(43) Veröffentlichungstag der Anmeldung :
**12.09.84 Patentblatt 84/37**

(45) Bekanntmachung des Hinweises auf die Patenterteilung : **27.07.88 Patentblatt 88/30**

(84) Benannte Vertragsstaaten :
**BE DE FR GB IT NL**

(56) Entgegenhaltungen :
**EP-A- 0 000 930**
**DE-A- 2 310 450**
**GB-A- 1 201 334**
**PATENTS ABSTRACTS OF JAPAN, Band 4, Nr. 26 (C-1) [508], 6. März 1980, Seite 115 C 1**
**LIEBIGS ANNALOGEN DER CHEMIE, Nr. 1, Januar 1984, Seiten 1693-1698, Verlag Chemie GmbH, Weinheim, DE; J. RACHON et al.: "Synthese von methyl(ethyl-)-amino(diethoxyphosphoryl)acetat sowie 2-phosphonoglycin und seinen derivaten aus (isocyanmethyl)phosphonsäure-diethylester"**

(73) Patentinhaber : **CIBA-GEIGY AG**
**Klybeckstrasse 141**
**CH-4002 Basel (CH)**

(72) Erfinder : **Cook, Barry, Dr.**
**11 Warwick Drive Urmston**
**Manchester M31 2AY Lancashire (GB)**

**EP 0 118 395 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren, das die Korrosion auf Metalloberflächen und/oder die Kesselsteinablagerung auf ihnen inhibiert.

In der Britischen Paten-Anmeldung 2 112 370 wird eine Methode zur Behandlung eines wässerigen Systems beschrieben, um die Korrosion von Metallen zu inhibieren, insbesondere eisenartigen Metallen, welche in Kontakt mit dem wässerigen System stehen, und/oder die die Kesselsteinablagerung aus dem wässerigen System zu verhindern, wobei das wässrige System 0,1 bis 50 000 ppm 2-Hydroxyphosphonessigsäure der Formel

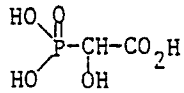

oder ein wasserlösliches Salz davon im wässerigen System enthält.

Ferner werden in der DE-A-2 310 450 als Korrosions- und Steinverhütungsmittel u. a. Phosphoncarbonsäuren vorgeschlagen, deren α C-Atom durch eine Hydroxygruppe substituiert ist und aus der GB-A-1 201 334 sind Diphosphonsäuren sowie α-Aminophosphonsäuren bekannt, die ebenfalls wirksame Korrosionsinhibitoren darstellen.

Es wurde nun gefunden, dass gewisse 2-Aminophosphonessigsäure-Verbindungen ebenso wirksam als Korrosions- und/oder Kesselstein-Inhibitoren, sind, gegebenenfalls in Kombination mit Metallionen, wenn sie wässerigen Systemen, die in Kontakt mit Metalloberflächen stehen, hinzugefügt werden, und wenn sie benutzt werden, um die Metalloberflächen vor ihrem Kontakt mit einer korrosiven und kesselsteinablagernden Umgebung vorzubehandeln.

Dementsprechend liefert die vorliegende Erfindung ein Verfahren zum Konditionieren von Metalloberflächen, insbesondere Eisen-, Kupfer- (oder deren Legierungen)-Oberflächen, um deren Korrosion und/oder die Kesselsteinablagerung darauf zu inhibieren, indem die besagten Oberflächen

A) vor dem Kontakt mit einer korrosiven oder kesselsteinbildenden Umgebung mit

i) einer Verbindung der Formel (I) :

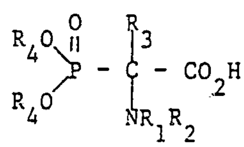

(I)

oder einem wasserlöslichen Salz (oder Teil-Ester oder Teil-Salz) davon, worin $R_1$ und $R_2$ gleich oder verschieden sind und jeweils Wasserstoff, eine geradkettige oder verzweigte $C_1$-$C_{12}$-Alkylgruppe (gegebenenfalls substituiert durch eine oder mehrere Hydroxy- und/oder Carboxylgruppen und/oder gegebenenfalls unterbrochen durch ein oder mehrere Sauerstoffatome), eine geradkettige oder verzweigte $C_3$-$C_{12}$-Alkenylgruppe, eine $C_7$-$C_{15}$-Aralkylgruppe oder $—CH_2PO_3H_2$ bedeuten, oder worin $R_1$ und $R_2$ zusammen mit dem Stickstoffatom, an das sie jeweils gebunden sind, einen gegebenenfalls substituierten heterocyclischen Ring bilden ; $R_3$ Wasserstoff, eine geradkettige oder verzweigte $C_1$-$C_{12}$-Alkylgruppe oder eine gegebenenfalls substituierte $C_6$-$C_{10}$-Arylgruppe ist ; und worin $R_4$ Wasserstoff oder eine geradkettige oder verzweigte $C_1$-$C_4$-Alkylgruppe ist, und gegebenenfalls

ii) einer Metallion-Komponente b), wie hiernach definiert, behandelt werden und/oder

B) während des Kontaktes mit einem wässerigen System, welches fähig ist, eine Metalloberfläche zu korrodieren oder darauf Kesselstein abzulagern, mit a) einer Verbindung der Formel I oder einem wasserlöslichen Salz (oder Teil-Salz) davon, und gegebenenfalls b) einem Metallion, welches synergistisch die Metall-Konditionierung verbessert, die auch einzeln durch eine Verbindung der Formel I und ein Metallion bewirkt wird, behandelt werden.

Die Behandlungen A und B können vorteilhaft angewandt werden, indem die Metall-Oberfläche kathodisch polarisiert wird, wobei sie z. B. mit irgendeiner der üblichen Techniken behandelt wird, wo der Strom aufgedrückt wird (impressed current technique) (s. z. B. Abschnitt 11, « Corrosion », L. L. Shreier, Newnes-Butterworth 1976).

Beispiele für $R_1$ und/oder $R_2$ als geradkettige oder verzweigte $C_1$-$C_{12}$-Alkylgruppen (gegebenenfalls Hydroxy- oder Carboxy-substituiert) schliessen Methyl-, Aethyl-, n-Propyl-, Isopropyl-, n-Butyl-, Isobutyl-, t-Butyl-, n-Pentyl-, n-Hexyl-, n-Octyl-, n-Nonyl-, n-Octyl-, n-Undecyl- und n-Dodecylgruppen ; 2-Hydroxyäthyl-, 2-Hydroxypropyl-, 2-Hydroxybutyl- und 2,3-Dihydroxypropylgruppen und Carboxymethyl-, 2-Carboxyäthyl-, 2-Carboxypropyl-, 3-Carboxybutyl- und 1,2-Dicarboxyäthylgruppen ein.

Beispiele für $R_1$ und/oder $R_2$ als geradkettige oder verzweigte $C_3$-$C_{12}$-Alkenylgruppen schliessen Prop-2-enyl, n-But-2-enyl, 2-Methyl-prop-2-enyl, n-Pent-2-enyl, n-Hex-2-enyl, n-Hexa-2,4-dienyl, n-Dec-10-enyl und n-Dodec-12-enyl ein. $C_7$-$C_{15}$-Aralkylgruppen $R_1$ und/oder $R_2$ schliessen Benzyl-, α-Methylben-

zyl-, $\alpha,\alpha$-Dimethyl-benzyl-, $\alpha$- und $\beta$-Phenyläthyl-, Benzhydryl- oder Naphthylmethylgruppen ein.

Wenn $R_1$ und $R_2$ zusammen mit dem Stickstoffatom, an das sie gebunden sind einen gegebenenfalls substituierten heterocyclischen Ring bilden, kann dies z. B. Pyrrolidin-, Piperidin-, Morpholin- oder 2,5-Dimethylmorpholin-Ring sein.

Geradkettige oder verzweigte $C_1$-$C_{12}$ Alkylgruppen $R_3$ sind beispielsweise Methyl-, Aethyl-, n-Propyl-, Isopropyl-, n-Butyl- oder t-Butyl-gruppen; gegebenenfalls substituierte $C_6$-$C_{10}$ Arylgruppen $R_3$ schliessen Phenyl-, Tolyl-, Xylyl, Cumuryl-, Butylphenyl- und Naphthylgruppen ein.

Bevorzugte Verbindungen der Formel I sind jene, worin $R_1$ und $R_2$ jeweils Wasserstoff oder $C_1$-$C_4$ Alkyl, $R_3$ und $R_4$ jeweils Wasserstoff sind.

Wasserlösliche Salze oder partielle Salze von Verbindungen der Formel I sind beispielsweise Alkalimetallsalze, wie Lithium-, Natrium- und Kaliumsalze, Erdalkalimetallsalze, wie Calcium, Magnesium, Strontium und Barium; andere Metallionen, wie Cobalt-, Eisen-, Zink-, Chrom-, Nickel-, Mangan-, Cadmium- und Cer-Ionen; Ammoniak und $C_1$-$C_{20}$ Alkylaminsalze (gegebenenfalls substituiert mit 1-6 Hydroxygruppen), wie Methylamin, Aethylamin, n-Propylamin, Trimethylamin, Triäthylamin, n-Butylamin, n-Hexylamin, n-Octylamin, Aethanolamin und Triäthylamin.

Viele Verbindungen der Formel I sind neu und bilden als solche einen Teil der Erfindung. Die Verbindung der Formel I jedoch, worin $R_1$, $R_2$, $R_3$ und $R_4$ jeweils Wasserstoff sind, ist in der Japanischen Offenlegungsschrift JP 54 089 027 beschrieben.

Weiterer Gegenstand der Erfindung sind Verbindungen der Formel I

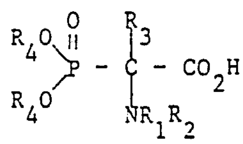

(I)

oder wasserlösliche Salze (oder Teil-Ester oder Teil-Salze) davon, worin $R_1$ und $R_2$ gleich oder verschieden sind und jeweils Wasserstoff, geradkettiges oder verzweigtes $C_1$-$C_{12}$ Alkyl, welches gegebenenfalls durch ein oder mehrere Hydroxy- und/oder Carboxyl-Gruppen substituiert und/oder gegebenenfalls durch ein oder mehrere Sauerstoff-Atome unterbrochen sein kann, geradkettiges oder verzweigtes $C_3$-$C_{12}$ Alkenyl, $C_7$-$C_{15}$ Aralkyl oder $—CH_2PO_3H_2$ sind, oder worin $R_1$ und $R_2$ zusammen mit dem Stickstoffatom, an das sie gebunden sind, einen gegebenenfalls substitutierten heterocyclischen Ring bilden, und worin $R_3$ Wasserstoff, geradkettiges oder verzweigtes $C_1$-$C_{12}$ Alkyl oder eine gegebenenfalls substituierte $C_6$-$C_{10}$ Arylgruppe ist, und worin $R_4$ Wasserstoff oder ein geradkettiges oder verzweigtes $C_1$-$C_4$ Alkyl bedeutet, vorausgesetzt, dass $R_1$, $R_2$, $R_3$ und $R_4$ nicht jeweils Wasserstoff sind, wobei Verbindungen der Formel

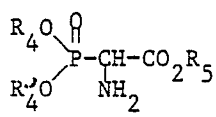

in denen $R_4$ —H, $R_4^{\bullet}$ $—C_2H_5$ oder $R_4$ und $R_4^{\bullet}$ $—C_2H_5$ und $R_5$ $—CH_3$ oder $—C_2H_5$ bedeuten, ausgenommen sind.

Die zuletzt genannten Verbindungen der angegebenen Formel gehören zum Stand der Technik; hingewiesen wird auf J. Rachon et al. Liebigs Ann. Chem. 1693-1698 (1981).

Die bereits gegebene beispielhafte Ausdeutung der Reste $R_1$, $R_2$, $R_3$ und $R_4$ soll auch hier zur Anwendung kommen.

Die neuen Verbindungen der Formel I können nach an sich bekannten Methoden, wie z. B. in den folgenden Reaktionsschemata dargestellt, hergestellt werden:

1)

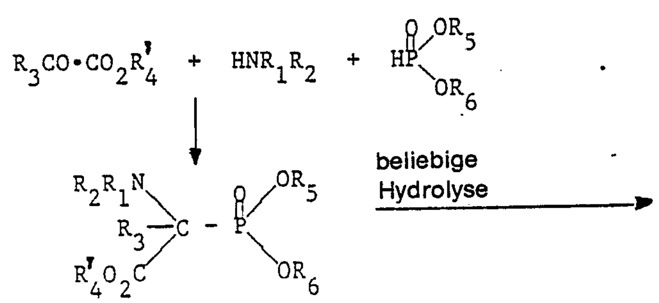


(I)

worin $R_1$, $R_2$ und $R_3$ ihre frühere Bedeutung haben, $R'_4$ Wasserstoff oder Alkyl ist und $R_5$ und $R_6$ gleich oder verschieden sind und jedes von ihnen Wasserstoff, Alkyl oder Aralkyl ist. Beliebige übliche Hydrolyse-Techniken werden angewandt, wenn in irgendeinem intermediären Ester $R'_4$, $R_5$ und $R_6$ nicht

Wasserstoff sind. Jeder erforderliche Katalysator kann eine Mineralsäure, wie z. B. HCl, eine organische Säure oder eine Lewis-Säure, wie z. B. $AlCl_3$, $ZnCl_2$ oder $BF_3$, sein.

Diese allgemeine Technik ist von D. Redmore in J. Org. Chem. 43, 992 (1978) beschrieben ;

(2)

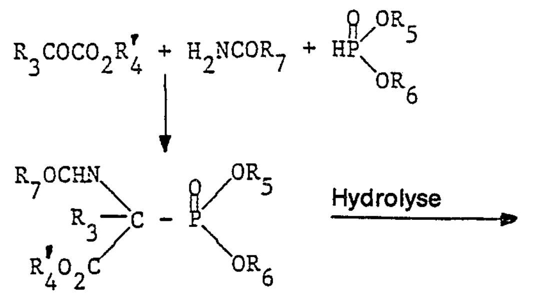


(I)

worin $R_3$, $R'_4$, $R_5$ und $R_6$ ihre frühere Bedeutung haben und $R_7$ Wasserstoff, ein Alkyl-, Aralkyl- oder Aryl-Radikal ist. Diese Technik ist von Oleksyszyn und Gruszeeka in Tetrahedron Letters 36, 3537 (1981) beschrieben ;

(3)

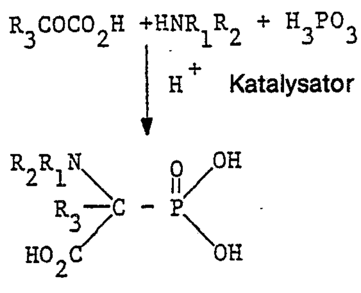


worin $R_1$, $R_2$ und $R_3$ ihre frühere Bedeutung haben.

Diese Methode, die früher angewandt wurde, wobei nur Formaldehyd als Carbonylreaktant benutzt wurde, ist im wesentlichen jene, die von Moedritzer und Irani, J. Org. Chem. 31, 1603 (1966) beschrieben worden ist ;

(4)

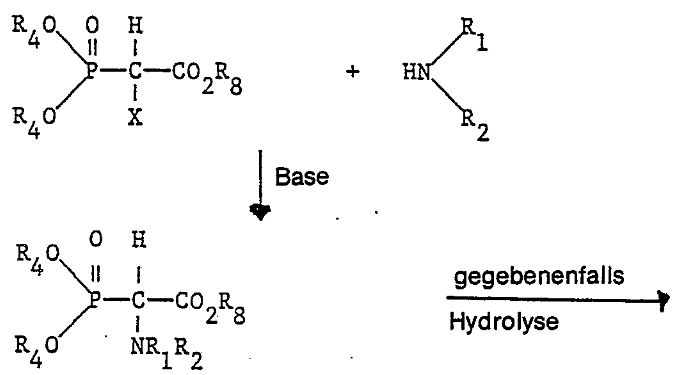


(I)

worin $R_1$, $R_2$ und $R_4$ die bereits gegebene Bedeutung haben und worin $R_8$ Wasserstoff oder $C_1$-$C_4$ Alkyl und X Cl oder Br ist. Geeignete Basen sind Natrium- oder Kaliumhydroxid oder tertiäre Amine, wie Triethanolamin.

5) Verbindungen der Formel I, in welcher $R_1$ und/oder $R_2$ $—CH_2PO_3H_2$ (Phosphonomethylen) sind, können durch Reaktion einer Verbindung der Formel I, in der $R_1$ und $R_2$ jeweils Wasserstoff sind, mit Formaldehyd und Phosphorsäure — wie von Moedritzer und Irani in J. Org. Chem. 31, 1603 (1966) beschrieben — hergestellt werden.

Bezüglich der Behandlungen, ausgeführt nach Punkt A), kann die zu behandelnde Metalloberfläche z. B. mit einer wässrigen Lösung der Verbindungen der Formel I (oder einem wasserlöslichen Salz davon) gegebenenfalls in Kombination mit einer Metallion-Komponente b), in Kontakt stehen, welches die synergistischen korrosionsinhibierenden und/oder kesselsteininhibierenden Effekte in Kombination mit Verbindungen der Formel I hervorruft.

Einige typische Anwendungen der Behandlungen A) mit der bevorzugten Anwendung der aufgeprägten Stromtechniken schliessen den zeitlichen Schutz der Metalloberflächen ein, die einer korrosiven Atmosphäre, wie z. B. der umgebenden Atmosphäre, ausgesetzt sind ; Vorbehandlung von nachfolgend mit Farbe zu behandelnden Metalloberflächen, Co-Behandlung, um eine phosphatierte Metalloberfläche zu versiegeln, und Formulierung einer Farbe, die Verbindungen der Formel I (oder ein wasserlösliches

Salz davon) und gegebenenfalls eine Metallionenkomponente b) enthält, und wo dann die Farbe auf die zu konditionierende Metalloberfläche, z. B. durch Sprayen, Pinseln, durch Tauchen oder kathodische Elektro-Ablagerung, aufgetragen wird.

In jeder dieser typischen Anwendungen der Behandlung vom Typ A kann die Metalloberfläche, z. B. eine phosphatierte Flussstahl (weicher Stahl)-Oberfläche, in eine Lösung aus Verbindungen der Formel I (oder einem wasserlöslichen Salz davon), die gegebenenfalls eine Metallion-Komponente b) enthält, wie bereits früher definiert, eingetaucht werden, oder die besagte Lösung kann auf die besagte Metalloberfläche gemalt oder gesprayt werden.

Bei Behandlungen, die die Erfindung unter den Punkten A oder B betreffen, kann die Metallion-Komponente als ein unabhängiges Metallsalz oder als ein vorgebildetes Salz der Verbindung der Formel I oder als eine Kombination der beiden benutzt werden.

Bei der Metallion-Komponenten b) handelt es sich um z. B. Cobalt-, Eisen-, Barium-, Calcium-, Zink-, Chrom-, Nickél-, Strontium-, Mangan-, Cadmium-, Cer- und Magnesium-Ionen ein. Einige dieser Metallionen, wie z. B. Calcium und Barium, gewähren für sich noch keine Korrosions- oder Kesselstein-Inhibition.

Das Verhältnis der Verbindungen der Formel I (oder wasserlösliche Salze davon) zur Metallion-Komponente b), die in den korrosions- und/oder kesselstein-inhibierenden Kombinationen benutzt wird, welche in den konditionierenden Verfahren der Erfindung zur Anwendung kommen, kann innerhalb weiter Grenzen, z. B. von 100 : 1 bis 1 : 100, bevorzugt von 10 : 1 bis 1 : 10 Gewichtsteilen variiert werden.

In der Praxis wird die Menge der Kombination aus Verbindungen der Formel I und einem Metallion, das zur Behandlung der Metalloberfläche durch Hinzufügen zum wässerigen System benutzt wird, welches in Kontakt mit der Metalloberfläche steht, variieren. Diese Variation hängt von der Schutzfunktion ab, die von der Kombination bei der Anwendung gefordert wird. Für korrosions-inhibierende Schutzbehandlungen, gegebenenfalls in Kombination mit kesselsteininhibierenden Behandlungen, liegt die Menge besagter Kombination, die dem wässerigen System hinzugefügt wird, üblicherweise innerhalb des Bereichs von 0,1 bis 50 000 ppm (oder 0,000 01 bis 5 Gew.-%), bevorzugt von 1 bis 500 ppm (oder 0,000 1 bis 0,05 Gew.-%), und besonders bevorzugt von 1 bis 100 ppm, bezogen auf das wässerige System. Für die Schutzbehandlung gegen die Kesselsteinablagerung allein beträgt die dafür verwendete Menge üblicherweise von 1 bis 200 ppm, vorzugsweise von 1 bis 30 ppm, bezogen auf das wässerige System.

Bezüglich der wässerigen Systeme, die erfindungsgemäss behandelt werden können, sind hinsichtlich der kombinierten Korrosions-Inhibitions- und Antikesselsteinablagerungs-Behandlungen Kühlwassersysteme, Dampf erzeugende Systeme, Meerwasser-Verdampfer, hydrostatische Kocher, Gaswaschsysteme, Heizsysteme mit geschlossenem Kreislauf, auf wässerigem System basierende Kühlsysteme und Systeme zur Anwendung bei strukturtiefen Bohrungen (downwell systems) von besonderem Interesse.

Für Korrosionsinhibitions-Behandlungen allein schliessen wässerige Systeme, die von besonderem Interesse sind, wässrige Flüssigkeits-Formulierungen zur maschinellen Bearbeitung (z. B. Bohren, Fräsen, Ausbohren, Nutenziehen, Ziehen, Drücken auf der Drehbank, Drehen, Schneiden, Sägen, Schleifen, Gewindeschneiden oder der nicht-spanabhebenden Verformung beim Ziehen und Walzen), wässrige Reinigungssysteme, Systeme zur Maschinenkühlung, wässrige Glycol-Antigefrier-Systeme, hydraulische Wasser/Glycol-Flüssigkeiten und auf Wasser basierende polymere Oberflächenbeschichtungssysteme/ oder auf Lösungsmittel basierende Polymersysteme, wie z. B. jene, die Tetrahydrofuran, Ketone oder Alkoxyalkanole enthalten, ein.

Die erfindungsgemäss benutzte Inhibitor-Kombination kann allein oder zusammen mit anderen Verbindungen benutzt werden, von denen bekannt ist, dass sie bei der Behandlung wässriger Systeme brauchbar sind.

Für die Behandlung von vollständig wässerigen Systemen, wie Kühlwassersysteme, Klimaanlagensysteme, Dampf erzeugende Systeme, Meerwasser-Verdampfungssysteme, hydrostatische Kocher und Heiz- und Kühlsysteme mit geschlossenem Kreislauf, können weitere Korrosionsinhibitoren, wie z. B. wasserlösliche Zink-Salze, Phosphate, Polyphosphate, Phosphonsäuren und ihre Salze, z. B. Acetodiphosphonsäure, Nitrilo-tris-methylen-phosphonsäure und Methylamino-dimethylenphosphonsäure, benutzt werden ; weiterhin können auch 2-Hydroxy-phosphonessigsäure oder andere Phosphoncarbonsäuren und ihre Salze Anwendung finden, z. B. jene, die in der DE-OS 26 32 774 beschrieben sind, 2-Phosphonbutan-1,2,4-tricarbonsäure, und jene, die in GB 1 572 406 offenbart sind ; Chromate, beispielsweise Natriumchromat, Nitrate, z. B. Natriumnitrat, Nitrite, beispielsweise Natriumnitrit ; Molybdate, z. B. Natriummolybdat, Silikate, beispielsweise Natriumsilikat, Benztriazole, 5,5-Methylen-bis-benztrizol oder Kupfer-deaktivierende Benztriazol- oder Tolutriazol-Derivate oder ihre Mannich-Basen-Derivate, N-Acylsarcosine, N-Acylaminodiessigsäuren, Aethanolamine, Fettsäureamine, und Polycarbonsäuren, z. B. Polymalein- und Polyacrylsäure wie auch ihre jeweiligen Alkalimetallsalze, Copolymere der Maleinanhydride, Copolymere der Acrylsäure und substituierte Derivate der Polymalein- und Polyacrylsäure und deren Polymere.

Weiterhin kann in solchen vollständig wässerigen Systemen der erfindungsgemäss benutzte Inhibitor in Verbindung mit weiteren dispergierenden und/oder Antifällungsmitteln, z. B. polymerisierte Acrylsäure (oder deren Salze, Phosphinopolycarbonsäuren (wie im Britischen Patent 1 458 235 beschrieben), hydrolysiertes Polyacrylnitril, polymerisierte Methacrylsäure und deren Salze, Polyacrylamide und Co-Polymere davon mit Acryl- und Methacrylsäure, Ligninsulfonsäure und Salze davon, Taurin, Naphthalinsulfonsäure-Formaldehyd-Kondensationsprodukte, Stärke und deren Derivate, Cellulose, Acrylsäure/Niederalkylhydroxyacrylat-Copolymere, wie jene, die in der U.S. Patent-Schrift Nr. 4 029 577 beschrieben sind, sulfonierte Styrol/Maleinsäureanhydrid-Copolymere, Styrol/Maleinsäureanhydrid-Copolymere und sulfonierte Homopolymere, wie jene, die in der U.S. Patent-Schrift Nr. 4 374 733 beschrieben sind, und Kombinationen davon, eingesetzt werden. Spezifische Antifällungsmittel können ebenfalls verwendet werden, wie z. B. 2-Phosphonbutan-1,2,4-tricarbonsäure, Acetyldiphosphonsäure, hydrolysiertes Polymaleinsäureanhydrid und dessen Salze, Alkylphosphonsäuren, 1-Aminoalkyl-1,1-diphosphonsäuren und deren Salze, sowie Alkalimetallpolyphosphate.

Zusammen mit der Verbindung der Formel I können auch Ausfällungsmitel, wie Alkalimetallorthophosphate und -carbonate ; $O_2$ bindende Mittel ($O_2$ Scavengers) wie Alkalimetallsulfite und Hydrazine ; Sequestriermittel, wie Nitrilotriessigsäure und Salze davon ; Antischaummittel, wie Silicone, z. B. Polydimethylsiloxane, Distearylsebacinsäureamid, Distearyladipinsäureamid und verwandte Produkte, die sich aus Aethylenoxid- und Propylenoxid-Kondensationen in Addition mit Fettalkoholen, ableiten, wie Caprylalkohole und deren Aethylenoxidkondensationsprodukte ; ferner Biozide, wie Amine, quaternäre Ammonium-Verbindungen, Chlorophenole, Schwefel enthaltende Verbindungen wie Sulfone, Methylen-bisthiocyanate und Carbamate, Isothiazolone, bromierte Propionsäureamide, Triazine, Phosphonium-Verbindungen, chlorierte oder Chlor abgebende Mittel und organometallische Verbindungen wie Tributylzinnoxid, eingesetzt werden.

Ist das erfindungemäss inhibierte System keine vollständig wässrige flüssige Formulierung wie z. B. eine maschinell arbeitende Formulierung, so handelt es sich z. B. um eine mit Wasser verdünnbare Schneid- oder Schleifflüssigkeit.

Die wässrigen flüssigen Formulierungen für die maschinell arbeitenden Systeme gemäss der Erfindung können z. B. Formulierungen für die Metallbearbeitung sein. Unter Metallbearbeitung wird Ausbohren, Nutenziehen, Ziehen, Drücken auf der Drehbank, Schneiden, Schleifen, Bohren, Fräsen, Drehen, Sägen, nicht-spanabhebendes Verformen und Walzen verstanden.

Als Beispiele von mit Wasser verdünnbaren Schneid- oder Schleif-Flüssigkeiten, denen das Korrosionsschutzmittel der Formel I einverleibt werden kann, seien erwähnt :

a) Wässrige Konzentrate eines oder mehrerer Korrosionsinhibitoren und gegebenenfalls eines oder mehrerer Anti-Verschleissmittel, in Verdünnungen von 1 : 50 bis 1 : 100, die üblicherweise als Schleif-Flüssigkeiten Verwendung finden.

b) Polyglykole, die Biozide, Korrosionsinhibitoren und Anti-Verschleissmittel enthalten, und die für Schneidoperationen in Verdünnungen von 1 : 20 bis 1 : 40 und für Schleifoperationen in Verdünnungen von 1 : 60 bis 1 : 80 verwendet werden.

c) Halb-synthetische Schneidflüssigkeiten, die den unter b) genannten Systemen ähnlich sind, aber zusätzlich 10 bis 25 % Oel mit ausreichendem Emulgator enthalten, um das mit Wasser verdünnte Produkt durchscheinend zu machen.

d) Emulgierbare Mineralölkonzentrate, die z. B. Emulgatoren, Korrosionsinhibitoren, Hochdruck/Antiverschleiss-Hilfsmittel, Biozide, Antischaummittel, Haftmittel und dergleichen enthalten, werden im allgemeinen mit Wasser zu weissen opaken Emulsionen mit einer Konzentration von 1 : 10 bis 1 : 50 verdünnt.

e) Aehnliche Produkte wie unter d) angegeben, die weniger Oel und mehr Emulgator enthalten, und die beim Verdünnen auf Konzentrationen von 1 : 50 bis 1 : 100 durchscheinende Emulsionen für Schneid- und Schleifoperationen ergeben.

Bei den teilweise wässerigen Systemen, in denen die wässerigen System-Komponente eine wässerige flüssige Formulierung für die maschinelle Bearbeitung ist, kann die Verbindung der Formel I allein oder im Gemisch mit anderen Zusatzstoffen, z. B. weitere bekannte Korrosionsinhibitoren und/oder Hochdruck-Zusätzen, verwendet werden.

Beispiele für andere Korrosionsinhibitoren, die in diesen wässrigen Systemen zusätzlich zur benutzten erfindungsgemässen Inhibitor-Zusammensetzung angewendet werden, schliessen die folgenden Gruppen ein :

a) Organische Säuren, deren Ester oder Ammonium-, Amin-, Alkanolamin- und Metallsalze, z. B. Benzoesäure, p-tert. Butylbenzoesäure, Dinatrium-sebacat, Triäthanolaminlaurat, Iso-nonansäure, Triäthanolaminsalz (der p-Toluolsulfonamid-capronsäure, Triäthanolaminsalz der Benzolsulfonamid-capronsäure, Triäthanolaminsalze der 5-Ketocarboxylsäurederivate, wie in der EP-Anmeldung 41 927 beschrieben, Natrium-N-Laurylsarcosinat oder Nonyl-phenoxy-essigsäure ;

b) N-haltige Verbindungen der folgenden Klassen :

Fettsäurealkanolamide, Imidazoline, z. B. 1-Hydroxy-äthyl-2-oleyl-imidazolin ; Oxazoline ; Triazole, z. B. Benztriazole oder ihre Mannich-Base-Derivate, Triäthanolamine, Fettsäureamine und anorganische

Salze. z. B. Natriumnitrat ;

c) P-haltige Verbindungen der folgenden Klassen :
Aminphosphate, Phosphonsäuren oder anorganische Salze, z. B. Natriumdihydrogenphosphat oder Zinkphosphat.

d) S-haltige Verbindungen der folgenden Klassen :
Natrium-, Calcium- oder Barium-Petrolsulfonate oder heterocyclische Verbindungen, z. B. Natriummercaptobenzthiazole.

N-haltige Verbindungen, insbesondere Triäthanolamin, sind bevorzugt.

Beispiele für Hochdruck-Zusätze, die in den erfindungsgemässen Systemen vorhanden sein können, sind S- und/oder P- und/oder Halogen-haltige Verbindungen, z. B. sulfuriertes Spermöl, sulfurierte Fette, Tritolylphosphat, chlorierte Paraffine oder äthoxylierte Phosphatester.

Wird Triäthanolamin in den erfindungsgemässen wässrigen Systemen verwendet, so beträgt das Verhältnis der Inhibitor-Kombination a) und b) zu Triäthanolamin 2 : 1 bis 1 : 20.

Die teilweise wässrigen, erfindungsgemäss inhibierten Systeme, können auch wässrige Oberflächenbeschichtungssysteme sein, z. B. sogenannte Primer-Emulsionfarben und wässrige Pulver-Beschichtungsmittel für metallische Substrate.

Die wässrigen Oberflächenbeschichtungsmittel können z. B. Anstrichfarben sein, wie Styrol/Acryl-Copolymer-Emulsionsfarben, Harze, Latex oder andere poylmere Oberflächenbeschichtungsmittel auf wässriger Basis, um ein Metall-Teil zu beschichten. Die benutzte erfindungsgemässe Inhibitor-Zusammensetzung kann gebraucht werden, um das Schnellrosten des Metallteils während der Anwendung der Oberflächen-Beschichtung und die nachfolgende Korrosion während der Benutzung des beschichteten Metalls zu verhindern.

In den erfindungsgemäss inhibierten Oberflächenbeschichtungssystemen kann die Inhibitor-Zusammensetzung allein oder im Gemisch mit anderen Zusätzen, z. B. bekannten Korrosionsinhibitoren, Bioziden, Emulgatoren, und/oder Pigmenten verwendet werden.

Als weitere bekannte Korrosionsinhibitoren können z. B. solche der im Vorangehenden unter a), b), c) und d) genannten Art eingesetzt werden.

Als Beispiele von Bioziden für derartige wässrige Systeme, die zusammen mit der Verbindung der Formel I verwendet werden können, seien erwähnt : Phenole, alkylierte und halogenierte Phenole, z. B. Pentachlorphenol, o-Phenylphenol, o-Phenoxyphenol und chloriertes o-Phenoxyphenol, ferner Salicylanilide, Diamine, Triazine und organometallische Verbindungen, wie Organoquecksilber- und Organozinn-Verbindungen.

Als Pigmente können in derartigen Systemen z. B. Titandioxid, Zinkchromat, Eisenoxid und organische Pigmente, wie Phthalocyanine, eingesetzt werden.

Die folgenden Beispiele dienen zur weiteren Illustrierung der Erfindung.

## Beispiel 1

Eine Lösung aus 16,3 Gewichtsteilen Diäthylaminhydrochlorid, 16,6 Gewichtsteilen Orthophosphorsäure und 29,6 Gewichtsteilen Glyoxylsäure (50 %iger wässeriger Lösung) in 50 Volumenteilen 80 %iger Chlorwasserstoffsäure wird 18 Stunden unter Rückfluss erhitzt. Die flüchtigen Bestandteile werden dann durch Vakuumdestillation beseitigt, und das zurückbleibende Oel mit Aceton zerrieben, um die Unreinheiten zu beseitigen. Auf diese Weise werden 28 Gewichtsteile 2-Diäthylaminophosphonessigsäurehydrochlorid-monohydrat erhalten, welches die folgende Gewichtsanalyse aufweist :

Gefunden : P 11,54 % ;

$C_6H_{12}NO_5$ P · HCl · $H_2O$ fordert : P 11,67 % ;

Zusätzlich zeigt ein $^{31}$P-NMR eine Absorption bei 15,8 ppm ($J_{P\text{-}CH}$ = $18H_3$) von $H_3$ $PO_4$ (in Wasser).

## Beispiel 2

Eine Lösung aus 11,8 Gewichtsteilen Acetamid, 16,4 Gewichtsteilen Orthophosphorsäure in 40 Volumenteilen Acetanhydrid wird unter Rühren auf 45 °C erhitzt. Zu dieser Lösung werden portionsweise 22,2 Gewichsteile Glyoxylsäurehydrat über 15 Minuten hinzugegeben. Die Reaktionstemperatur steigt auf 80 °C während des Hinzufügens, und diese Temperatur wird für weitere 3 Stunden aufrechterhalten. Das Acetanhydrid wird dann durch Vakuumdestillation beseitigt, und der viskose Rest wird in 100 Volumenteilen konzentrierter Salzsäure aufgelöst. Diese Lösung wird 4 Stunden lang unter Rückfluss erhitzt, dann bis in den trockenen Zustand eingedampft, wobei ein brauner kristalliner Festkörper resultiert, der bei Auflösung in 600 Volumenteilen 60 %igem wässerigem Methanol, gefolgt von einem Hinzufügen von Propylenoxid, 9,3 Gewichtsteile 2-Aminophosphonessigsäure-monohydrat ergibt, welches bei 195 °C unter Zersetzung schmilzt, und welches die folgende Elementaranalyse nach Gewicht aufweist :

Gefunden : C 13,92 H 4,57 N 7,97 P 17,79 % ($C_2H_6NO_3P \cdot H_2O$)

Gefordert : C 13,88 H 4,66 N 8,10 P 17,90 %

## Beispiel 3

Eine Lösung aus 92, Gewichtsteilen Glyoxylsäurehydrat, 8,7 Gewichtsteilen Morpholin und 8,2 Gewichtsteilen Orthophosphorsäure in 100 Volumenteilen Chlorwasserstoffsäure wird in gleicher Weise wie in Beispiel 1 behandelt und liefert 24,5 Gewichtsteile 2-N-Morpholin-phosphonessigsäure. Das $^{31}P$-NMR-Spektrum (in Wasser) zeigt eine Absorption bei 13,8 ppm bei tieferem Feld gegenüber $H_3PO_4$ ($J_{P\text{-}CH}$ = 18 $H_3$).

## Beispiel 4

Auf gleiche Weise wie in Beispiel 1 reagiert eine Lösung aus Sarcosin (8,9 Gewichtsteile), Orthophosphorsäure (8,2 Gewichtsteile) in 100 Gewichtsteilen 18 %-iger Chlorwasserstoffsäure und gibt nach dem Eindampfen 25,8 Gewichtsteile 2-(N-Methyl-N-carboxymethyl-amino)phosphonessigsäure-hydrochlorid als einen blass-gelben amorphen Festkörper, der ein $^{31}P$-NMR Signal bei 13,3 ppm bei tieferem Feld gegenüber $H_3PO_4$ (in Wasser) ($J_{P\text{-}CH}$ = 18 $H_3$) aufweist.

## Beispiel 5

Eine Lösung aus 2-Aminophosphonessigsäure (7,8 Gewichtsteile), p-Formaldehyd (4,5 Gewichtsteile) und Orthophosphorsäure (8,2 Gewichtsteile) wird in 40 Volumenteilen konzentrierter Salzsäure für 8 Stunden unter Rückfluss erhitzt. Die Beseitigung des Lösungsmittels durch Vakuumdestillation bei 90 °C/1 · 6 · $10^3$ Pa (12 mm Hg) führt zu 16,2 Gewichtsteilen eines schwarz-roten viskosen Oels, dessen $^{31}P$-NMR-Spektrum mit der Struktur für 2-(N,N-Bisphosphonmethylenamino)phosphonessigsäure, die jeweils Peaks bei 9,7 ppm (Triplett J = 13 Hz) und 14,6 ppm (Dublett J = 18 Hz) bei tieferem Feld bezüglich $H_3PO_4$ aufweist.

## Beispiel 6

Die Korrosionsinhibitor-Aktivität der aktiven Verbindungen der Formel I wird in der folgenden Weise durch den « Aerated Solution Bottle Test » anhand einer belüfteten Lösung in einer Flasche und unter Benutzung eines korrosiven Standard-Wassers, welches wie folgt zusammengesetzt ist : 20 g $CaSO_4 \cdot 2H_2O$, 15 g $MgSO_4 \cdot 7H_2O$, 4,6 g $NaHCO_3$, 7,7 g $CaCl_2 \cdot 6H_2O$ und 205 l destilliertes Wasser, demonstriert.

5 × 2,5 cm grosse Stücke aus Flussstahl (weicher Stahl) werden mit Bimsstein geschrubbt, während einer Minute in Chlorwasserstoffsäure eingetaucht und dann gespült, getrocknet und gewogen.

Das gewünschte Verhältnis der Additiv-Kombination wird in 200 ml des korrosiven Standard-Wassers gelöst. Zwei Stahlstücke werden in der Lösung suspendiert, und das Ganze wird in einer geschlossenen Flasche in einem Thermostat bei 40 °C gelagert. Während der Lagerung wird Luft mit einer Geschwindigkeit von 500 ml/Minute durch die Lösung geleitet, wobei die Luft vom Stahlstück ferngehalten wird ; irgendwelche Wasserverluste durch Verdampfung werden fortlaufend mit destilliertem Wasser ersetzt.

Nach 64 Stunden werden die Stahlstücke entfernt, mit Bimsstein geschrubbt, eine Minute in Chlorwasserstoffsäure, die mit 1 Gew.-% Hexamethylendiamin inhibiert ist, eingetaucht, dann gespült, getrocknet und wieder gewogen. Es tritt ein gewisser Gewichtsverlust ein. Für jede Reihe von Versuchen wird ein Blindversuch durchgeführt, d. h. Eintauchen von Stahlprobestückchen in das Testwasser, in Abwesenheit von irgend einem möglichen Korrosionsinhibitor. Der Korrosionsgrad wird in Milligramm Gewichtsverlust/Quadratzentimeter/Tag (G.Q.D.) berechnet, der Einfachheit halber werden die Resultate jedoch als prozentmässige Schutzwirkung angegeben, die wie folgt definiert ist :

% Schutzwirkung =

Korrosionsgrad des Blindversuchs (in G.Q.D.)—

$$\frac{\text{Korrosionsgrad der Probe (in G.Q.D.)}}{\text{Korrosionsgrad des Blindversuchs (in G.Q.D.)}} \times 100$$

Die Ergebnisse, die in einer Reihe von Versuchen, in denen eine Verbindung der Formel I als Korrosionsinhibitor benutzt wird, erhalten werden, sind in Tabelle I aufgeführt :

### Tabelle I

Flussstahl (weicher Stahl)-Korrosions-Inhibition mit Verbindungen der Formel I in einem Standard-Korrosions-Wasser

| Produkt aus Beispiel | Konzentration (ppm) | % Korrosions-Inhibition |
|---|---|---|
| 1 | 100 | 91 |

Tabelle I (Fortsetzung)

| Produkt aus Beispiel | Konzentration (ppm) | % Korrosions-Inhibition |
|---|---|---|
| 2 | 100 | 99 |
| 4 | 200 | 95 |

Beispiel 7 : Antifällungstest für Calciumcarbonat

Die folgenden Lösungen (a), (b) und (c) werden hergestellt :

a) Calciumnitrat-Lösung

1,47 g Calciumnitrat-tetrahydrat werden in deionisiertem Wasser gelöst, und die Lösung wird auf 1 Liter gebracht ;

b) Natriumcarbonat-Lösung

0,464 g Natriumcarbonat werden in deionisiertem Wasser gelöst, und die Lösung wird auf 1 Liter gebracht.

c) Lösung von 2-Amino-phosphonessigsäure

3-Amino-phosphonessigsäure-monohydrat, welches wie in Beispiel 2 erhalten wird, wird in Wasser gelöst und gibt eine Lösung, die 1 000 ppm aktiven Zusatzstoff enthält.

50 ml der Calciumnitrat-Lösung werden in eine 120 g Glasflasche gefüllt, die mit einem Schraubdeckel versehen ist. Dieser Lösung wird jenes Volumen der Lösung c) hinzugefügt, das erforderlich ist, um jeweils eine Konzentration des 2-Amino-phosphonessigsäure-monohydrats von 5 ppm, 7,5 ppm oder 10 ppm im Endvolumen (100 ml) der Test-Lösung (z. B. 1,0 ml der 0,1%-igen Lösung (c) erzeugt eine Konzentration von 10 ppm des 2-Amino-phosphonessigsäure-monohydrats in der Testlösung) zu erzeugen. 50 ml der Lösung b) werden hinzugegeben, und die Mischung wird geschüttelt. Die Test-Lösung wird dann während 24 Stunden in einem Bad bei einer konstanten Temperatur von 25 °C gelagert. 25 ml dieser Testlösung werden danach entzogen, ein Kristall von Patton und Reader-Reagenz [2-Hydroxy-1-(2'-hydroxy-4'-sulfo-1'-naphthylazo)-3-naphthoesäure] und anschliessend zwei Pillen Natriumhydroxid zugegeben. Die resultierende Lösung wird mit einer 0,1 M Standard-Lösung Aethylendiamintetraacetat-Dinatrium Salz titriert. Die Resultate sind in der folgenden Tabelle II zusammengestellt und drücken die Verhinderung der Calciumcarbonat-Ausfällung, bezogen auf einen Blindtiter (beispielsweise einen, der nicht 2-Aminophosphonessigsäure enthält), aus.

$$\% \text{ Inhibition} = \frac{(\text{Titer} - \text{Blindtiter})}{(7{,}78 - \text{Blindtiter})} \times 100$$

7,78 ist der maximal mögliche Titrationswert für 100 % Inhibition

Tabelle II

| Beispiel | Inhibitor-Struktur | % Inhibition durch Fällung bei Additiv-Anteil von | | |
|---|---|---|---|---|
| | | 5 ppm | 7.5 ppm | 10 ppm |
| 7 | 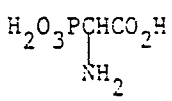 | 95 | 96 | 97 |

**Patentansprüche**

1. Verfahren zum Konditionieren von Metalloberflächen, um ihre Korrosion und/oder die Kesselsteinablagerung darauf zu inhibieren, indem die besagten Oberflächen

A. vor dem Kontakt mit einer korrosiven oder kesselsteinbildenden Umgebung mit

i) einer Verbindung der Formel (I) :

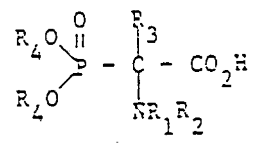

(I)

oder einem wasserlöslichen Salz (oder Teil-Ester oder Teil-Salz) davon, worin $R_1$ und $R_2$ gleich oder verschieden sind und jeweils Wasserstoff, eine geradkettige oder verzweigte $C_1$-$C_{12}$-Alkylgruppe (gegebenenfalls substituiert durch eine oder mehrere Hydroxy- und/oder Carboxylgruppen und/oder gegebenenfalls unterbrochen durch ein oder mehrere Sauerstoffatome), eine geradkettige oder verzweigte $C_3$-$C_{12}$-Alkenylgruppe, eine $C_7$-$C_{15}$-Aralkylgruppe oder $—CH_2PO_3H_2$ bedeuten, oder worin $R_1$ und $R_2$ zusammen mit dem Stickstoffatom, an das sie jeweils gebunden sind, einen gegebenenfalls substituierten heterocyclischen Ring bilden ; $R_3$ Wasserstoff, eine geradkettige oder verzweigte $C_1$-$C_{12}$-Alkylgruppe oder eine gegebenenfalls substituierte $C_6$-$C_{10}$-Arylgruppe ist ; und worin $R_4$ Wasserstoff oder eine geradkettige oder verzweigte $C_1$-$C_4$-Alkylgruppe ist, und gegebenenfalls

ii) einer Metallion-Komponente b), aus der Reihe der Cobalt-, Eisen-, Barium-, Calcium-, Zink-, Chrom-, Nickel-, Strontium-, Mangan-, Cadmium-, Cer- oder Magnesium-Ionen, allein oder in einem Gemisch untereinander behandelt werden, und/oder

B. während des Kontaktes mit einem wässerigen System, welches fähig ist, eine Metalloberfläche zu korrodieren oder darauf Kesselstein abzulagern, mit a) einer Verbindung der Formel I oder einem wasserlöslichen Salz (oder Teil-Salz) davon, und gegebenenfalls b) einem Metallion, wie oben definiert, welches synergistisch die Metall-Konditionierung verbessert, die auch einzeln durch eine Verbindung der Formel I und ein Metallion bewirkt wird, behandelt werden.

2. Verfahren gemäss Anspruch 1, worin $R_1$ und $R_2$ jeweils Wasserstoff oder $C_1$-$C_4$ Alkyl und $R_3$ und $R_4$ jeweils Wasserstoff sind.

3. Verfahren gemäss Anspruch 1, worin Eisen-, Kupfer- (oder deren Legierungen)-Oberflächen behandelt werden.

4. Verfahren gemäss Anspruch 1, worin die zu behandelnde Metalloberfläche kathodisch polarisiert wird.

5. Verfahren gemäss Anspruch 1, worin die Metalloberfläche vor dem Kontakt mit einer korrosiven Umgebung mit einer wässerigen Lösung der Verbindungen der Formel I (oder einem wasserlöslichen Salz davon) und gegebenenfalls mit einer Metallion-Komponente b), wie in Anspruch 1 definiert, behandelt wird.

6. Verfahren gemäss Anspruch 5, worin ein Metallsalz verwendet wird, welches Metallionen, wie in Anspruch 1 definiert, liefert, die die korrosions-inhibierenden und/oder kesselstein-inhibierenden Effekte in Kombination mit Verbindungen der Formel I verleihen.

7. Verfahren gemäss Anspruch 1, wobei temporärer Schutz von Metalloberflächen, die korrosiven Atmosphären ausgesetzt sind, bewirkt sind durch : Vorbehandlung von Metalloberflächen, die mit Farbe behandelt werden sollen ; Co-Behandlung, um phosphatierte Metalloberflächen zu versiegeln ; Formulierung einer Farbe, die Verbindungen der Formel I (oder ein wasserlösliches Salz davon) und gegebenenfalls eine Metallion-Komponente b), wie in Anspruch 1 definiert, enthält, und nachfolgende Anwendung dieser Farbe auf die zu konditionierende Metalloberflächen.

8. Verfahren gemäss Anspruch 1, worin das Verhältnis der Verbindungen der Formel I (oder einem wasser-löslichen Salz davon) zu irgendeiner Metallion-Komponente b), wie in Anspruch 1 definiert, innerhalb des Bereichs von 100 : 1 bis 1 : 100 liegt.

9. Verfahren gemäss Anspruch 8, worin das Verhältnis von Verbindungen der Formel I (oder einem wasser-löslichen Salz davon) zu einer Komponente b) zwischen 10 : 1 bis zu 1 : 10 liegt.

10. Ein Verfahren gemäss Anspruch 1, worin die Inhibitor-Kombination a) und b) in einem wässerigen System, das in Kontakt mit der Metalloberfläche steht, die korrosions-inhibierenden und gegebenenfalls kesselstein-inhibierenden Schutzbehandlungen erforderlich macht, in einer Menge von 1 bis 500 ppm verwendet wird, bezogen auf das wässrige System.

11. Ein Verfahren gemäss Anspruch 10, worin die Inhibitor-Kombination a) und b) in einer Menge von 1 bis 100 ppm, bezogen auf das wässerige System, hinzugefügt wird.

12. Ein Verfahren gemäss Anspruch 1, worin die Inhibitor-Kombination a) und b) einem wässerigen System, welches in Kontakt mit einer Metalloberfläche ist, die nur eine kesselstein-inhibierende Behandlung erforderlich macht, in einer Menge von 1-200 ppm, bezogen auf das wässerige System, hinzugefügt wird.

13. Ein Verfahren gemäss Anspruch 12, worin die Inhibitor-Kombination a) und b) dem wässerigen System in einer Menge von 1 bis 30 ppm, bezogen auf das wässerige System, hinzugefügt wird.

14. Ein Verfahren gemäss Anspruch 10, worin das wässerige System in Kontakt mit der Metalloberfläche ist, die nur ein Korrosions-Inhibitions-System erforderlich macht, und eine wässerige Maschinen-Flüssigkeits-Formulierung, ein wässeriges Reinigungs-System, ein wässeriges Glycol-Gefrierschutzmittelsystem, eine hydraulische Wasser/Glycol-Flüssigkeit oder eine auf Wasser basierende Oberflächen-Beschichtungs-Zusammensetzung ist.

15. Ein Verfahren gemäss Anspruch 14, worin die wässerige Maschinen-Flüssigkeits-Formulierung eine mit Wasser verdünnte Schneid- oder Schleif-Flüssigkeit ist.

16. Ein Verfahren gemäss Anspruch 1, worin das wässerige System in Kontakt mit der Metalloberfläche ist, die eine kombinierte Korrosions-Inhibitions- und Antikesselstein-Behandlung erforderlich macht, und ein Kühlwassersystem, ein dampferzeugendes System, ein Seewasser-Verdunster, ein hydrostatischer Kocher, ein Gas-Wasch-System, ein geschlossenes Wärmekreislauf-System, ein auf Wasser basierendes Kühl-System oder ein System zur Anwendung bei strukturtiefen Bohrungen ist.

17. Ein Verfahren gemäss Anspruch 1, worin die Inhibitor-Kombination a) und b) allein oder in Verbindung mit anderen Korrosionsinhibitoren verwendet wird.

18. Ein Verfahren gemäss Anspruch 17, worin das wässerige System ein vollständig wässeriges System und z. B. Kühl-Wasser-System, ein Klimaanlagen-System, ein dampferzeugendes System, ein Seewasser-Verdunster, ein hydrostatischer Kocher, ein Gas-Wasch-System oder geschlossenes Wärmekreislauf-System oder ein Kühl-System ist und worin die Inhibitor-Kombination a) und b) zusammen mit einem oder mehreren weiteren Korrosionsinhibitoren, einem dispergierenden und/oder Antifällungs-Agens, einem Ausfällungsmittel, einem $O_2$ bindenden Mittel, einem Sequestrier-Agens, einem Antischaummittel und einem Biocid angewendet wird.

19. Ein Verfahren gemäss Anspruch 17, worin das teilweise wässerige System eine wässerige Oberflächen-Beschichtungs-Zusammensetzung ist und worin die Inhibitor-Kombination a) und b) in Verbindung mit einem oder mehreren Korrosionsinhibitoren, einem Biocid, einem Emulgator und/oder einem Pigment verwendet wird.

20. Ein Verfahren gemäss Anspruch 17, worin das wässerige System nur teilweise wässerig ist und eine wässerige Maschinen-Flüssigkeit ist und worin die Inhibitor-Kombination a) und b) in Verbindung mit einem oder mehreren weiteren Korrosionsinhibitoren und/oder einem Hochdruck Additiv verwendet wird.

21. Ein Verfahren gemäss Anspruch 20, worin der weitere Korrosionsinhibitor Triäthanolamin ist.

22. Ein Verfahren gemäss Anspruch 21, worin Triäthanolamin in einer solchen Menge vorhanden ist, dass das Verhältnis der Inhibitor-Kombination a) und b) zu Triäthanolamin von 2 : 1 bis 1 : 20 reicht.

23. Metall-Oberflächen, konditioniert durch ein Verfahren gemäss Anspruch 1.

24. Verbindungen der Formel I

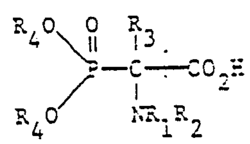

oder wasserlösliche Salze (oder Teil-Ester oder Teil-Salze) davon, worin $R_1$ und $R_2$ gleich oder verschieden sind und jeweils Wasserstoff, geradkettiges oder verzweigtes $C_1$-$C_{12}$ Alkyl, welches gegebenenfalls durch ein oder mehrere Hydroxy- und/oder Carboxyl-Gruppen substituiert und/oder gegebenenfalls durch ein oder mehrere Sauerstoff-Atome unterbrochen sein kann, geradkettiges oder verzweigtes $C_3$-$C_{12}$ Alkenyl, $C_7$-$C_{15}$ Aralkyl oder $—CH_2PO_3H_2$ sind, oder worin $R_1$ und $R_2$ zusammen mit dem Stickstoffatom, an das sie gebunden sind, einen gegebenenfalls substituierten heterocyclischen Ring bilden, und worin $R_3$ Wasserstoff, geradkettiges oder verzweigtes $C_1$-$C_{12}$ Alkyl oder eine gegebenenfalls substituierte $C_6$-$C_{10}$ Arylgruppe ist, und worin $R_4$ Wasserstoff oder ein geradkettiges oder verzweigtes $C_1$-$C_4$ Alkyl bedeutet, vorausgesetzt, dass $R_1$, $R_2$, $R_3$ und $R_4$ nicht jeweils Wasserstoff sind, wobei Verbindungen der Formel

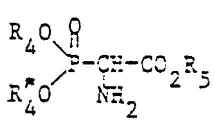

in denen $R_4$ —H, $R_4^*$ $—C_2H_5$ oder $R_4$ und $R_4^*$ $—C_2H_5$ und $R_5$ $—CH_3$ oder $—C_2H_5$ bedeuten, ausgenommen sind.

## Claims

1. Process for conditioning metal surfaces to inhibit their corrosion and/or to inhibit scale deposition thereon, by treating said surfaces :

A. prior to contact with a corrosive or scaling environment, with

i) a compound of the formula (I) :

(See formula page 12)

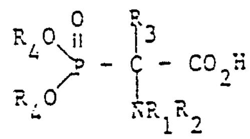

(I)

or a water-soluble salt (or partial ester or partial salt) thereof, wherein $R_1$ and $R_2$ are the same or different and each is hydrogen, a straight-chain or branched $C_1$-$C_{12}$alkyl group (optionally substituted by one or more hydroxyl and/or carboxyl groups and/or optionally interrupted by one or more oxygen atoms), a straight-chain or branched $C_3$-$C_{12}$alkenyl group, a $C_7$-$C_{15}$aralkyl group or $—CH_2PO_3H_2$, or wherein $R_1$ and $R_2$, together with the nitrogen atom to which they are each bonded, form an optionally substituted heterocyclic ring ; $R_3$ is hydrogen, a straight-chain or branched $C_1$-$C_{12}$alkyl group of an optionally substituted $C_6$-$C_{10}$aryl group ; and wherein $R_4$ is hydrogen or a straight-chain or branched $C_1$-$C_4$alkyl group ; and optionally

ii) a metal ion component b) from the series comprising the ions of cobalt, iron, barium, calcium, zinc, chromium, nickel, strontium, manganese, cadmium, cerium, or magnesium, individually or in a mixture with one another ; and/or

B. during contact with an aqueous system capable of corroding a metal surface or of depositing scale thereon, by treating with a) a compound of the formula I or a water-soluble salt (or partial salt) thereof ; and optionally b) a metal ion, as defined above, which synergistically enhances the metal conditioning also individually effected by a compound of the formula I and a metal ion.

2. Process according to claim 1, wherein $R_1$ and $R_2$ are each hydrogen or $C_1$-$C_4$alkyl and $R_3$ and $R_4$ are each hydrogen.

3. Process according to claim 1, wherein iron or copper surfaces (or surfaces of their alloys) are treated.

4. Process according to claim 1, wherein the metal surface to be treated is cathodically polarised.

5. Process according to claim 1, wherein the metal surface, prior to contact with a corrosive environment, is treated with an aqueous solution of the compounds of the formula I (or a water-soluble salt thereof) and optionally with a metal ion component b), as defined in claim 1.

6. Process according to claim 5, wherein a metal salt is used, providing metal ions, as defined in claim 1, which impart corrosion-inhibiting and/or scale inhibiting effects in combination with compounds of the formula I.

7. Process according to claim 1, where temporary protection of metal surfaces which are exposed to corrosive atmospheres is effected by : pre-treatment of metal surfaces to be painted ; co-treatment in order to seal phosphated metal surfaces ; or formulation of a paint containing compounds of the formula I (or a water-soluble salt thereof) and optionally a metal ion component b), as defined in claim 1, and then application of this paint to the metal surfaces to be conditioned.

8. Process according to claim 1, wherein the ratio of compounds of the formula I (or a water-soluble salt thereof) to any metal ion component b), as defined in claim 1, is within the range of from 100 : 1 to 1 : 100.

9. Process according to claim 8, wherein the ratio of the compounds of the formula I (or a water-soluble salt thereof) to a component b) is between 10 : 1 and 1 : 10.

10. A process according to claim 1, wherein the inhibitor combination a) and b) is used in an aqueous system, in contact with a metal surface which requires corrosion-inhibiting and optionally scale-inhibiting protective treatments, in an amount of from 1 to 500 ppm, based on the aqueous system.

11. A process according to claim 10, wherein the inhibitor combination a) and b) is added in an amount of from 1 to 100 ppm based on the aqueous system.

12. A process according to claim 1, wherein the inhibitor combination a) and b) is added to an aqueous system, in contact with a metal surface which requires only a scale-inhibiting treatment, in an amount of from 1-200 ppm, based on the aqueous system.

13. A process according to claim 12, wherein the inhibitor combination a) and b) is added to the aqueous system in an amount of from 1 to 30 ppm, based on the aqueous system.

14. A process according to claim 10, wherein the aqueous system is in contact with the metal surface which requires only a corrosion inhibition system and is an aqueous machining fluid formulation, an aqueous scouring system, an aqueous glycol antifreeze system, a water/glycol hydraulic fluid or a water-based surface-coating composition.

15. A process according to claim 14, wherein the aqueous machining fluid formulation is a water-diluted cutting or grinding fluid.

16. A process according to claim 1, wherein the aqueous system is in contact with the metal surface which requires a combined corrosion inhibition and anti-scale treatment and is a cooling water system, a steam-generating system, a sea water evaporator, a hydrostatic boiler, a gas-scrubbing system, a closed circuit heating system, an aqueous-based refrigeration system or a system for use in down-wells.

17. A process according to claim 1, wherein the inhibitor combination a) and b) is used alone or in conjunction with other corrosion inhibitors.

18. A process according to claim 17, wherein the aqueous system is a completely aqueous system and is, for example, a cooling water system, an air-conditioning system, a steam-generating system, a sea

water evaporator, a hydrostatic boiler, a gas-scrubbing system or a closed circuit heating or refrigeration system and wherein the inhibitor combination a) and b) is used in conjunction with one or more further corrosion inhibitors, a dispersing and/or anti-precipitating agent, a precipitating agent, an oxygen scavenger, a sequestering agent, an anti-foaming agent and a biocide.

19. A process according to claim 17, wherein the partly aqueous system is an aqueous surface-coating composition and wherein the inhibitor combination a) and b) is used in conjunction with one or more corrosion inhibitors, a biocide, an emulsifier and/or a pigment.

20. A process according to claim 17, wherein the aqueous system is only partly aqueous and is an aqueous machining fluid and wherein the inhibitor combination a) and b) is used in conjunction with one or more further corrosion inhibitors and/or an extreme pressure additive.

21. A process according to claim 20, wherein the further corrosion inhibitor is triethanolamine.

22. A process according to claim 21, wherein triethanolamine is present in an amount such that the ratio of the inhibitor combination a) and b) to triethanolamine is from 2 : 1 to 1 : 20.

23. Metal surfaces conditioned by a process according to claim 1.

24. Compounds of the formula I

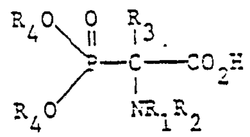

or water-soluble salts (or partial esters or partial salts) thereof, wherein $R_1$ and $R_2$ are the same or different and each is hydrogen, a straight-chain or branched $C_1$-$C_{12}$alkyl group which may be optionally substituted by one or more hydroxyl and/or carboxyl groups and/or may be optionally interrupted by one or more oxygen atoms, straight-chain or branched $C_3$-$C_{12}$alkenyl, $C_7$-$C_{15}$aralkyl or $-CH_2PO_3H_2$, or wherein $R_1$ and $R_2$, together with the nitrogen atom to which they are bonded, form an optionally-substituted heterocyclic ring, and wherein $R_3$ is hydrogen, straight-chain or branched $C_1$-$C_{12}$alkyl or an optionally substituted $C_6$-$C_{10}$aryl group, and wherein $R_4$ is hydrogen or a straight-chain or branched $C_1$-$C_4$alkyl ; provided that $R_1$, $R_2$, $R_3$ and $R_4$ are not each hydrogen, where compounds of the formula

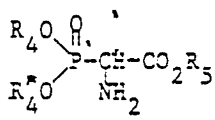

in which $R_4$ is $-H$, $R_4^*$ is $-C_2H_5$ or $R_4$ and $R_4^*$ are $-C_2H_5$ and $R_5$ is $-CH_3$ or $-C_2H_5$, are excepted.

## Revendications

1. Procédé de traitement de surfaces métalliques pour les protéger contre la corrosion et/ou les dépôts de tartre, procédé dans lequel on traite ces surfaces :

A. avant leur mise en contact avec un milieu corrosif ou donnant des dépôts de tartre, avec

1. un composé de formule I ci-dessous :

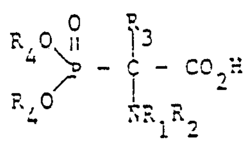

(I)

ou un sel hydrosoluble, un ester partiel ou un sel partiel de ce composé, (formule dans laquelle $R_1$ et $R_2$, qui peuvent être identiques ou différents l'un de l'autre, représentent chacun l'hydrogène, un alkyle en $C_1$-$C_{12}$ à chaîne linéaire ou ramifiée (avec éventuellement un ou plusieurs groupes hydroxyliques et/ou carboxyliques et/ou éventuellement interrompue par un ou plusieurs atomes d'oxygène), un alcényle à chaîne linéaire ou ramifiée en $C_3$-$C_{12}$, un aralkyle en $C_7$-$C_{15}$ ou un groupe $-CH_2PO_3H_2$, ou bien $R_1$ et $R_2$ forment ensemble et avec l'atome d'azote auquel ils sont liés un hétérocycle éventuellement substitué, $R_3$ représente l'hydrogène, un alkyle à chaîne linéaire ou ramifiée en $C_1$-$C_{12}$ ou un aryle en $C_6$-$C_{10}$ éventuellement substitué, et $R_4$ désigne l'hydrogène ou un alkyle à chaîne linéaire ou ramifiée en $C_1$-$C_4$), et le cas échéant avec

2. un composant d'ion de métal b) pris parmi les ions cobalt, fer, baryum, calcium, zinc, chrome, nickel, strontium, manganèse, cadmium, cérium et magnésium (un seul de ces ions ou plusieurs) et/ou :

B. au cours du contact avec un milieu aqueux pouvant corroder des surfaces métalliques ou y déposer du tartre, on traite ces surfaces avec a) un composé de formule I ci-dessus ou un sel ou un sel

partiel hydrosoluble de ce composé, et le cas échéant avec b) un ion de métal tel que défini ci-dessus, qui renforce le traitement de la surface par un effet de synergie, traitement qui est aussi réalisé individuellement par le composé de formule I et l'ion de métal.

2. Procédé selon la revendication 1 dans lequel, dans le composé de formule I, $R_1$ et $R_2$ sont chacun l'hydrogène ou un alkyle en $C_1$-$C_4$ et $R_3$ et $R_4$ sont chacun l'hydrogène.

3. Procédé selon la revendication 1 dans lequel on traite des surfaces de fer ou de cuivre ou de leurs alliages.

4. Procédé selon la revendication 1 dans lequel on polarise en cathode la surface métallique à traiter.

5. Procédé selon la revendication 1 dans lequel, avant de mettre la surface métallique en contact avec le milieu corrosif, on la traite avec une solution aqueuse d'un composé de formule I ou d'un sel hydrosoluble de celui-ci et, le cas échéant, avec un composant d'ion de métal b) tel que défini à la revendication 1.

6. Procédé selon la revendication 5 dans lequel on utilise un sel de métal donnant des ions de métal tels que définis à la revendication 1, qui inhibent la corrosion et/ou le dépôt de tartre en association avec les composés de formule I.

7. Procédé selon la revendication 1 dans lequel on crée une protection provisoire de surfaces métalliques qui sont exposées à une atmosphère corrosive par un traitement préalable de surfaces qui doivent être traitées avec une peinture ; par un cotraitement de surfaces métalliques phosphatées ; ou en préparant une peinture qui contient un composé de formule I ou un sel hydrosoluble de celui-ci avec éventuellement un composant d'ion de métal b) tel que défini à la revendication 1, peinture que l'on applique sur les surfaces à traiter.

8. Procédé selon la revendication 1 dans lequel le rapport du composé de formule I ou d'un sel hydrosoluble de celui-ci au composant d'ion de métal b) tel que défini à la revendication 1 est compris entre 100 : 1 et 1 : 100.

9. Procédé selon la revendication 8 dans lequel le rapport du composé de formule I ou de son sel hydrosoluble au composant b) est compris entre 10 : 1 et 1 : 10.

10. Procédé selon la revendication 1 dans lequel la proportion de l'association d'inhibiteurs a) et b) dans le milieu aqueux qui, en contact avec la surface métallique, rend nécessaires les traitements de protection contre la corrosion et le cas échéant contre le tartre, est de 1 à 500 ppm, concentration rapportée au milieu aqueux.

11. Procédé selon la revendication 10 dans lequel l'association d'inhibiteurs a) et b) est ajoutée au milieu aqueux dans une proportion de 1 à 100 ppm.

12. Procédé selon la revendication 1 dans lequel, pour un milieu aqueux en contact avec une surface métallique ne nécessitant qu'un traitement de protection contre le tartre, l'association d'inhibiteurs a) et b) est ajoutée au milieu aqueux dans une proportion de 1 à 200 ppm, rapportée au milieu aqueux.

13. Procédé selon la revendication 12 dans lequel cette proportion de l'association d'inhibiteurs a) et b) dans le milieu aqueux est de 1 à 30 ppm.

14. Procédé selon la revendication 10 dans lequel le milieu aqueux est en contact avec la surface métallique ne nécessitant qu'une protection contre la corrosion, et c'est un liquide aqueux pour des travaux d'usinage, un produit de nettoyage aqueux, un produit antigel aqueux contenant du glycol, un liquide hydraulique d'eau et de glycol ou un produit de revêtement de surfaces aqueux.

15. Procédé selon la revendication 14 dans lequel le liquide d'usinage est un liquide de coupe ou de polissage dilué à l'eau.

16. Procédé selon la revendication 1 dans lequel le milieu aqueux est en contact avec une surface métallique nécessitant à la fois une protection contre la corrosion et une protection contre le tartre, et il s'agit d'un liquide utilisé dans un appareil à eau de refroidissement, un appareil pour la production de vapeur, un évaporateur d'eau de mer, un bouilleur hydrostatique, un appareil de lavage de gaz, un appareil de chauffage à circuit fermé, ou dans un appareil de refroidissement à l'eau, ou encore d'un liquide pour des forages profonds.

17. Procédé selon la revendication 1 dans lequel l'association d'inhibiteurs a) et b) est employée seule ou avec d'autres inhibiteurs de corrosion.

18. Procédé selon la revendication 17 dans lequel le milieu aqueux est un milieu entièrement aqueux, utilisé par exemple dans un appareil à eau de refroidissement, un climatiseur, un appareil de production de vapeur, un évaporateur d'eau de mer, un bouilleur hydrostatique, un appareil de lavage de gaz, un appareil de chauffage à circuit fermé ou un appareil de refroidissement, et l'association d'inhibiteurs a) et b) est employée conjointement avec un ou plusieurs autres inhibiteurs de corrosion, un agent dispersant et/ou contre les précipitations, un agent de précipitation, un agent fixant l'oxygène, un agent de séquestration, un agent contre les mousses et un biocide.

19. Procédé selon la revendication 17 dans lequel le milieu partiellement aqueux est un produit de revêtement de surfaces et l'association d'inhibiteurs a) et b) est employée conjointement avec un ou plusieurs autres inhibiteurs de corrosion, un biocide, un émulsionnant et/ou un pigment.

20. Procédé selon la revendication 17 dans lequel le milieu aqueux est un milieu partiellement aqueux et c'est un liquide pour des travaux d'usinage, et l'association d'inhibiteurs a) et b) est employée conjointement avec un ou plusieurs autres inhibiteurs de corrosion et/ou un additif pour pressions élevées.

21. Procédé selon la revendication 20 dans lequel l'autre inhibiteur de corrosion est la triéthanolamine.

22. Procédé selon la revendication 21 dans lequel la triéthanolamine est ajoutée dans une proportion donnant un rapport de l'association d'inhibiteurs a) et b) à la triéthanolamine compris entre 2 : 1 et 1 : 20.

23. Surfaces métalliques qui ont été traitées par un procédé selon la revendication 1.

24. Les composés de formule I ci-dessous :

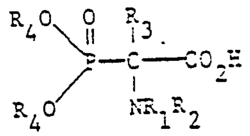

ainsi que des sels solubles dans l'eau, esters partiels ou sels partiels de ces composés, (formule dans laquelle $R_1$ et $R_2$, qui peuvent être identiques ou différents l'un de l'autre, représentent chacun l'hydrogène, un alkyle en $C_1$-$C_{12}$ à chaîne linéaire ou ramifiée (avec éventuellement un ou plusieurs groupes hydroxyliques et/ou carboxyliques et/ou éventuellement interrompue par un ou plusieurs atomes d'oxygène), un alcényle à chaîne linéaire ou ramifiée en $C_3$-$C_{12}$, un aralkyle en $C_7$-$C_{15}$ ou un groupe $—CH_2PO_3H_2$, ou bien $R_1$ et $R_2$ forment ensemble et avec l'atome d'azote auquel ils sont liés un hétérocycle éventuellement substitué, $R_3$ représente l'hydrogène, un alkyle à chaîne linéaire ou ramifiée en $C_1$-$C_{12}$ ou un aryle en $C_6$-$C_{10}$ éventuellement substitué, et $R_4$ désigne l'hydrogène ou un alkyle à chaîne linéaire ou ramifiée en $C_1$-$C_4$), à l'exception de ceux dans lesquels $R_1$, $R_2$, $R_3$ et $R_4$ sont chacun l'hydrogène, et les composés de formule

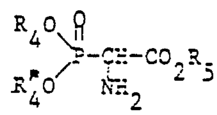

dans lesquels $R_4$ est l'hydrogène et $R_4^*$ le groupe $—C_2H_5$ ou $R_4$ et $R_4^*$ sont chacun le groupe $—C_2H_5$ et $R_5$ est le groupe $—CH_3$ ou $—C_2H_5$, étant également exclus de l'invention.